# EUROPEAN PATENT SPECIFICATION

(11) **EP 2 026 921 B1**
(45) Date of publication and mention of the grant of the patent: **26.03.2014**
(21) Application number: 07732754.2
(22) Date of filing: 10.05.2007
(51) Int. Cl.: B21J 15/32

(54) **FASTENER DELIVERY APPARATUS AND METHOD**
VORRICHTUNG UND VERFAHREN ZUR ZUFÜHRUNG VON BEFESTIGUNGSELEMENTEN
APPAREIL ET PROCÉDÉ DE DISTRIBUTION D'ATTACHES

(30) Priority: 13.05.2006 GB 0609581
(43) Date of publication of application: 25.02.2009
(73) Proprietor: HENROB LIMITED, Deeside Industrial Park Flintshire CH5 2NX (GB)
(72) Inventor: WILLIAMS, Neal, Sean, Warrington, Cheshire WA4 2AZ (GB); HUGHES, Geraint, Richard, Conwy, North Wales LL30 3EP (GB)
(74) Representative: Roberts, Peter David
(86) International application number: PCT/GB2007/001728
(87) International publication number: WO 2007/132195

(56) References cited:
- DE-A1- 3 301 243
- DE-C- 387 193
- DE-C- 945 681
- US-A- 4 620 656
- US-A1- 2003 034 355

## Description

The present invention relates to fastener delivery apparatus according to the preamble of claim 1 and method according to the preamble of claim 11 by which fasteners are fed to setting equipment for inserting the fasteners into a workpiece, an example being known from DE 3301243A.

The term "fastener" is used herein to include rivets, screws, slugs and other types of fastening devices.

In one known type of fastening technology, rivets are supplied to a rivet setting tool from a bulk source via an elongate, flexible delivery tube in which the rivet is propelled by, for example, compressed air. The delivery tube typically has an internal profile that conforms to the shape of the fastener but can accommodate a range of lengths but which is sized to leave a clearance between the wall of the tube and the fastener so as to allow the compressed air to flow in the tube. For fasteners with a head and a shank, such as a rivet, the internal profile of the tube is commonly T-shaped or circular. Such delivery tubes are typically made from a plastics material.

In certain fastener delivery applications two or more such fastener delivery tubes are joined at an interface. For example, a shuttle device may be used to distribute fasteners arriving in a single incoming delivery tube between two or more exit delivery tubes. This type of device might be used, for example, where fasteners are supplied from a single storage buffer or from a single bulk source and are to be distributed between two or more setting tools. Similarly, it may be required to acquire fasteners from two or more sources and supply them to a single destination (e.g. a setting tool). Alternatively, or in addition, a setting tool (typically supported by a robot handler) may be designed to dock at a docking station interface in order to reload with fasteners from a temporary storage buffer such as a magazine or cartridge.

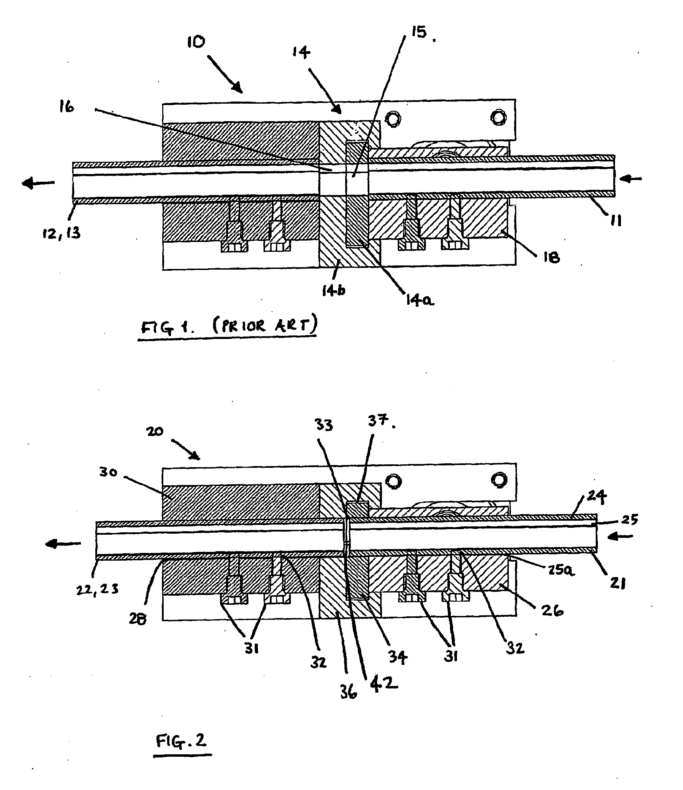

In a prior art shuttle device, illustrated in figure 1, a housing 10 receives the delivery tubes 11, 12, 13 and supports an interface 14 that is interposed between the incoming and exit tubes. The interface comprises two parts both made from a hard-wearing metal such as hardened steel: a sliding plate 14a and a retaining member 14b, the sliding plate being received in the retaining member such that it can slide relative thereto. The sliding plate 14a has a single port 15 that is T-shaped in cross-section (i.e. in the plane perpendicular to the longitudinal axis of the tubes and designed to conform to the internal profile of the delivery tubes 11, 12 and 13. Similarly, the retaining member 14b has two such ports 16 that are laterally spaced. An outlet end of the incoming delivery tube 11 is received in an aperture 17 in a carriage 18 that is designed to slide laterally in the housing 10. The sliding plate 14a is fixed to the end of the carriage 18 such that it abuts the end of the tube 11 and the port 15 is in register with the tube 11. The retaining member 14b is fixed relative to the housing 10 and abuts against the ends of the exit delivery tubes 12, 13 (one hidden behind the other in figure 1) that are received in the housing 10. Again, the ports 16 In the retaining member 14b are aligned with the respective exit tubes 12, 13. In operation, the carriage 18 is operable to slide laterally between a first position where the incoming delivery tube 11 and the port 15 in the sliding plate 14a are aligned with a first port 16 in the retaining member 14b and a first of the exit tubes 12 and a second position where they are aligned with a second of the ports 16 and the second 13 of the exit tubes. The shuttle device may be used in the opposite direction where there are two incoming delivery tubes and a single exit tube.

As a result of development testing performed by the applicant it has been established that there can be a tendency for the interior of the exit delivery tubes to wear at a significantly greater rate in the regions adjacent to the interface. It will be understood that wear of delivery tubes is undesirable as both the debris worn from the tubes and the eroded internal profile of the tube can lead to fasteners becoming lodged in the tubes or the shuttle device and thus interruption of the fastener delivery cycle and maintenance intervention. Debris can also affect the operation or reliability of downstream elements such as the rivet setting tool leading to additional maintenance and operating costs.

Measures to counteract such wear of delivery tubes usually involve modification of the delivery tube structure by inserting wear-resistant tracks or the like. Examples of such tubes are described in our European patent No. 1102650.

It is an object of the present invention to provide for improved fastener delivery apparatus that operates with increased reliability.

According to the present invention there is provided fastener delivery apparatus comprising first and second flexible elongate fastener delivery tubes in which fasteners are conveyed under pressure along a longitudinal axis of each tube, the first and second delivery tubes each having a peripheral wall, the walls defining substantially identical internal profiles having a shape designed to conform to the shape of the fasteners, an interface housing comprising a first aperture for receiving an end of the first delivery tube and second aperture for receiving an end of the second delivery tube, the apertures being substantially coaxially aligned, wherein the first and second delivery tubes are supported in the apertures with their ends spaced apart such that there is a predetermined clearance between the end of the peripheral wall of the first delivery tube and the end of the peripheral wall of the second delivery tube and such that there is no fastener-supporting track or guide between the ends of the delivery tubes.

The internal profiles of the tubes conform to the shape of the fasteners but yet are of such a size such that they can receive fasteners of different sizes e.g. the profile may be a T-shape whereby an upright stem of the T-shape is of a size to accommodate rivets of different stem lengths and the top or head of the T-shape can accommodate different head sizes. Alternatively the wall of the tube may be circular to accommodate fasteners being transported along their longitudinal axes.

The predetermined clearance may be in the range 0.5mm to 20mm, or alternatively in the range of 1 to 20 mm. Further alternative ranges include 0.5mm to 10mm, 1.0mm to 10mm, 0.5mm to 2.0mm or 1.0mm to 2.0mm.

The delivery tubes may be sealed to the housing in order to prevent the escape of the conveying fluid pressure (for example, compressed air).

The delivery tubes may be fixed in the housing by fixing screws that engage in bores or recesses in the outside surface of the peripheral walls. It will be understood that the housing may be rigid.

The housing may have a plurality of second apertures for supporting a plurality of second delivery tubes, the first delivery tube being slidably disposed in the housing so as to be selectively aligned with one of the second delivery tubes. The first delivery tube may be supported in a sliding member that slides relative to the housing. The end of the first delivery tube may be received in a sliding plate and the ends of the second delivery tubes received in a retaining member, the sliding plate having a port configured to conform to the external profile of the delivery tubes, the retaining member having a plurality of ports each conforming to the external profile of the delivery tubes. The sliding plate is designed to slide relative to the retaining member so as to bring the port in the plate into alignment with a selected one of the ports In the retaining member. The sliding plate has a face that is in sliding contact with a face of the retaining member, the ends of the tubes being offset from the respective faces.

There may be provided an actuator for selective positioning of the sliding member. The sliding member may be a carriage. The interface housing is manufactured from a material that has a hardness or abrasion resistance greater than that of the delivery tubes.

The interface housing may comprise first and second portions that are releasably connectable at a docking station. The first and second portions may have mating surfaces when docked, the ends of the delivery tubes being offset from the mating surfaces to provide said clearance when the portions are connected. The interface housing may comprise sleeve members disposed over the ends of the tubes, the sleeve members having flanges with end faces that form the mating surfaces. The interface housing may further comprise docking plates in which the sleeve members are supported, the sleeve members extending through apertures in the docking plates and the flanges being larger that the apertures to prevent passage of the sleeves therethrough In one direction,

According to the present invention there is also provided a method for delivering fasteners comprising the steps of propelling one or more fasteners in a first flexible elongate delivery tube under pressure along a longitudinal axis of the tube through an interface housing and out in a second flexible elongate delivery tube, the delivery tubes having peripheral walls that define substantially identical internal profiles having a shape configured to be complementary to the shape of the fasteners, the interface housing comprising a first aperture for receiving an end of the first delivery tube and second aperture for receiving an end of the second delivery tube, the apertures being substantially coaxially aligned, such that by supporting the first and second delivery tubes in the apertures with their ends spaced apart such that there is a predetermined clearance between the end of the peripheral wall of the first delivery tube and the end of the peripheral wall of the second delivery tube, and such that there is no fastener-supporting track or guide between the ends of the delivery tubes the fastener being propelled at such a speed and by such a pressure that it passes across the clearance from the first delivery tube into the second delivery tube.

Specific embodiments of the present invention will now be described with reference to the accompanying drawings in which:
Figure 1 is a sectioned side view of a shuttle device according the prior art;
Figure 2 is a sectioned side view of a shuttle device in accordance with the present invention;
Figure 3 is a plan, sectioned view of the shuttle device of figure 2 shown in a first position;
Figure 4 is the same view as figure 3 with the shuttle device shown in a second position;
Figure 5 is a perspective view of the shuttle of figures 2 to 4;
Figure 6 is a perspective view of a tool changer interface in accordance with the present invention;
Figure 7 is a sectioned side view of the interface before docking; and
Figure 8 is the same view as figure 7 with the interface shown in a docked configuration.

Referring now to figures 2 to 5 of the drawings, the exemplary fastener delivery apparatus comprises a shuttle interface having a housing 20 that receives a single rivet delivery tube 21 at one end and two parallel rivet delivery tubes 22,23 at an opposite end. For the sake of convenience, the single delivery tube 21 will be referred to as the entry tube and the two other tubes will be referred to as first and second exit tubes 22, 23. It is to be appreciated, however that in practice the apparatus can be used in the reverse configuration wherein there is a single exit tube and a pair of entry tubes.

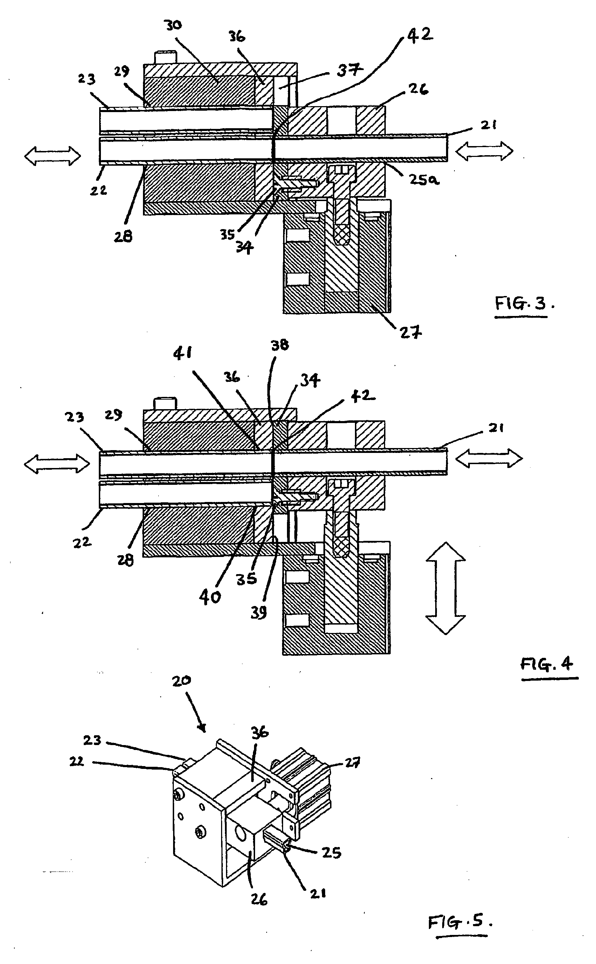

Rivets are propelled along the delivery tubes by compressed air in a known manner. Each delivery tube has a peripheral wall 24 that defines an internal track 25 with a T-shaped profile (as best seen in figure 5) designed to conform generally to the profile of the rivet to be conveyed. The stem of the T-shape in the track is of such a length that it can accommodate rivets of different shank length and the cross bar at the top of the profile is designed to ensure that it can receive a number of different head sizes. A small clearance between the wall and the rivet ensures that a stream of compressed air passes along the tube.

The entry delivery tube 21, which may provide rivets from, for example, bulk storage (not shown), is received in an aperture 25a in a sliding carriage 26 that is disposed in the housing 20. An actuator, such as a pneumatic cylinder 27 is connected to the carriage 26 and is operable to move it laterally within the housing 20 between two travel limit positions. The first and second exit tubes 22, 23 that may, for example, deliver rivets to the noses of two setting tools (not shown), are received in apertures 28, 29 in a fixed body 30 of the housing 20. The apertures 25a, 28 and 29 in the interface housing 20 are designed to receive the tubes 21, 22, 23 in a snug fit such that they are sealed thereto. Screw fixings 31 pass through threaded bores in the housing 20 and into through bores 32 in the outside surface of the peripheral walls 24 of the tubes in order to secure them in place.

The very end part of the entry delivery tube 21 is received in a port 33 in a sliding plate 34 that is fixed by screws 35 (one show in figures 4 and 5) to an end face of the carriage 26. The sliding plate 34 is received in a retainer member 36 that is connected to the fixed body 30 of the shuttle interface housing 20, the member 36 being recessed to provide a track 37 in which the plate 34 can slide. The sliding plate 34 and retaining member 36 have facing surfaces 38, 39 that slide over one another when the carriage 26 is moved and so are manufactured from a hard metal such as hardened steel so that they are wear and abrasion resistant. The retaining member 36 has two ports 40, 41 aligned with the apertures 28, 29 in the housing 20 in order to receive the very ends of the exit delivery tubes 22, 23.

In operation, the carriage 26 and the entry delivery tube 21 are slidable laterally of the housing 20 between a first position (see figure 3) where the entry delivery tube 21 is aligned with a first 22 of the exit delivery tubes so that a rivet that is transported through the shuttle interface emerges into the first exit delivery tube 22 and a second position (see figure 4) where it is aligned with second exit tube delivery tube 23. Whilst the sliding plate 34 and retaining member 36 have contacting surfaces 38, 39 that slide over one another, the ends of the aligned delivery tubes 21 and 22, or 21 and 23, are spaced apart despite extending into the plate 34 and member 36. The clearance 42 between the ends of the tubes is such that there is no contact between them i.e. there is a gap between the ends of their respective peripheral walls 24. The rivets are thus, in use, propelled across this clearance 42. The exact size of the clearance 42 depends on the rivet characteristics and the speed at which it travels through the interface. At the lower end of the desirable range the clearance may be 1mm but it has been found that rivets have travelled successfully across a clearance of up to 20mm without significant wear in the exit tubes 22, 23. A clearance of around 1.5 to 2mm is thought to be most practicable for most applications, although in some applications the clearance could be as low as 0.1mm or 0.5mm. It has been found, somewhat surprisingly that configuring the interface between delivery tubes in this manner in a shuttle interface greatly reduces the wear on the inside of the exit delivery tubes.

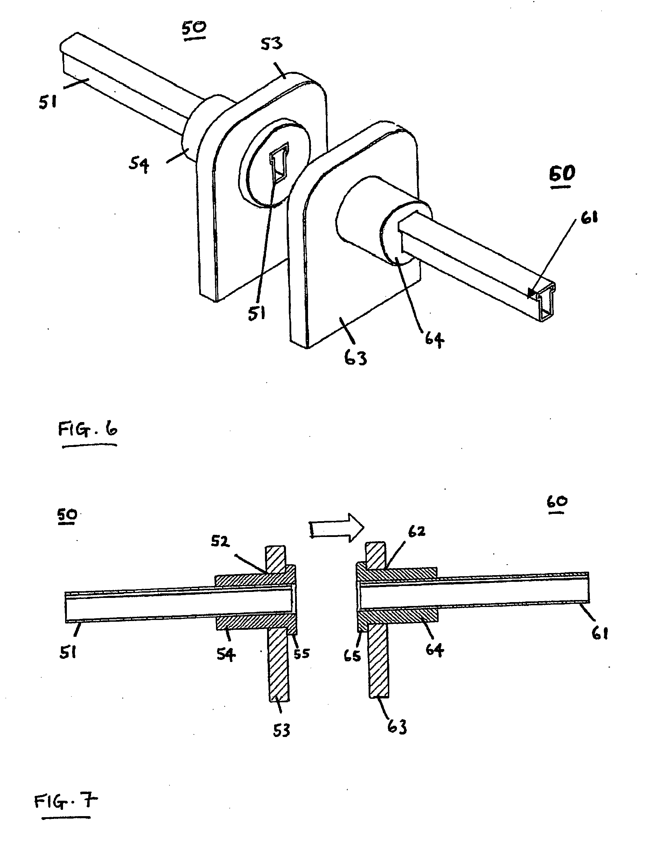

The same interface arrangement for delivery tubes may be applied to the docking interface of a tool changer or to a docking interface between a setting tool and a rivet supply as illustrated in figures 6 to 8. The interface is between the setting tool and robot side 50 and the rivet supply side 60 and provides docking between an entry delivery tube 61 from the rivet supply (not shown) and an exit delivery tube 51 that transports rivets to the rivet setting tool (not shown). At the the delivery tubes 51, 61 are mounted in apertures 52, 62 in flat docking plates 53, 63 by cylindrical sleeves 54, 64 that have and flanges 55, 65. The sleeves 54, 64 have an internal profile that conforms with the outside shape of the peripheral walls of the delivery tubes 51, 61 so that the tubes are snugly received therein. If necessary, fixing screws (not shown) can be used to fix the tubes in place as described in the foregoing embodiment of the invention. The sleeves 54, 64 are prevented from being pulled out of the docking plates 53, 63 by virtue of the flanges 55, 66 being larger than the apertures 52, 62 in the docking plates.

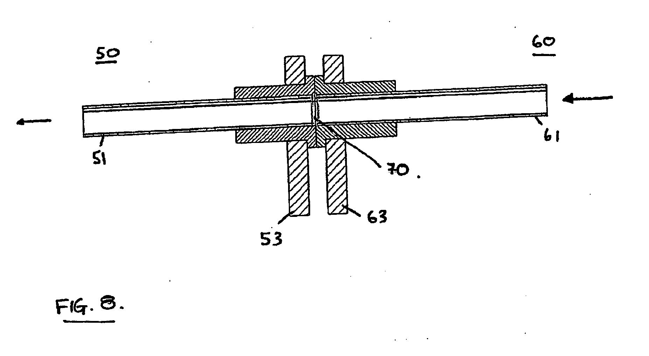

In operation, the exit delivery tube 51 and the docking plate 53 on the tool side are movable with the robot handler whereas the entry tube 61 and associated docking plate 63 are fixed. When it is necessary to reload the tool with rivets the robot docks at the interface so that the docking plates 53, 63 are brought into alignment. Guide pins and sockets (not shown) may be provided in or around the plates 53, 63 to assist in the docking process. When docked the exposed faces of the flanges 55, 65 on the sleeves 54, 64 abut against one another as shown in figure 8 and there is a clearance 70 between the ends of the delivery tubes 51, 61 of typically 1 to 2mm. The abutment of the flanges 55, 65 provides a mechanical seal between the sleeves 54, 64 so that there is no undue leakage of compressed air used to propel the rivets across the interface. The rivets may be propelled singly or in trains.

It is to be understood that numerous modifications may be made to the embodiments described above without departing from the scope of the invention as defined in the appended claims. For example, the exact profile of the peripheral wall both internally and externally will vary according to the type, size and shape of the fastener being delivered. Furthermore, it is to be understood that fluid other than compressed air may be used to propel the fasteners and that the internal track of the delivery tubes may be substantially circular to accommodate an arrangement where rivets are transported with their central axes extending along the elongate axis of the tube. It will also be appreciated that the present invention has application to any interface between two flexible elongate fastener delivery tubes in fastener delivery apparatus.

It is also to be understood that the fasteners can be propelled in trains with individual fasteners touching each other as they are transferred across the interface.

Although the present invention has been described in relation to rivets it is to be appreciated that it may be used in relation to the delivery of other types of fasteners.

## Claims

1. Fastener delivery apparatus comprising first and second flexible elongate fastener delivery tubes (21, 22, 23; 51, 61) in which fasteners are conveyed under pressure along a longitudinal axis of each tube, the first and second delivery tubes (21, 22, 23; 51, 61) each having a peripheral wall (24), the walls (24) defining substantially identical internal profiles (25) having a shape designed to conform to the shape of the fasteners, an interface housing (20; 54, 64) comprising a first aperture (25a) for receiving an end of the first delivery tube (21, 51) and second aperture (28, 29; 62) for receiving an end of the second delivery tube (22, 23; 61), the apertures (25a, 28, 29) being substantially coaxially aligned, **characterised in that** the first and second delivery tubes (21, 22, 23; 51, 61) are supported in the apertures (25a, 28, 29) with their ends spaced apart such that there is a predetermined clearance (42; 70) between the end of the peripheral wall of the first delivery tube (21; 51) and the end of the peripheral wall of the second delivery tube (22, 23; 61) and such that there is no fastener-supporting track or guide between the ends of the delivery tubes (21, 22, 23; 51, 61).

2. Fastener delivery apparatus according to claim 1, wherein the predetermined clearance (42; 70) is in the range 0.1mm to 20mm.

3. Fastener delivery apparatus according to claim 1, wherein the predetermined clearance (42; 70) is in the range 0.5mm to 10mm.

4. Fastener delivery apparatus according to claim 1, wherein the predetermined clearance (42; 70) is in the range 0.5mm to 2.0mm.

5. Fastener delivery apparatus according to any one of claims 1 to 4, wherein the delivery tubes (21, 22, 23; 51, 61) are fixed by fixing screws (31) that engage in bores or recesses (32) in the outside surface of the peripheral walls.

6. Fastener delivery apparatus according to any preceding claim, wherein the housing (20) has a plurality of second apertures (28, 29) that support a plurality of second delivery tubes (22, 23), the first delivery tube (21) being movable in the housing (20) so as to be selectively aligned with one of the second delivery tubes (28, 29).

7. Fastener delivery apparatus according to claim 6, wherein the second apertures (28, 29) are laterally spaced and extend substantially in parallel.

8. Fastener delivery apparatus according to claim 6 or 7, wherein the first delivery tube (21) is slidably supported in the housing for lateral movement between a first position where it is aligned with one of the second delivery tubes (28, 29) and a second position where it is aligned with another of the second delivery tubes.

9. Fastener delivery apparatus according to claim 7 or 8, wherein the first delivery tube (21) is supported in a sliding member (34) that slides relative to a fixed part (36) of the housing (20), an end of the first delivery tube is received in the sliding member and the ends of the second delivery tubes (22, 23) are received in a fixed retaining member (30) of the housing (20), the sliding member (34) having a port (33) configured to conform to the external profile of the delivery tubes, the retaining member (30) having a plurality of ports each conforming to the external profile of the delivery tubes (23, 23), at least part of the sliding member (34) is received in a track defined in the fixed retaining member (30).

10. Fastener delivery apparatus according to any one of claims 1 to 9, wherein the interface housing (20; 54, 64) comprises first and second releasably connectable interface portions (54, 64).

11. A method for delivering fasteners comprising the steps of propelling one or more fasteners in a first flexible elongate delivery tube (21; 51) under pressure along a longitudinal axis of the tube through an interface housing (20; 54, 64) and out in a second flexible elongate delivery tube (22, 23; 61), the delivery tubes having peripheral walls that define substantially identical internal profiles having a shape configured to be complementary to the shape of the fasteners, the interface housing (20; 54, 64) comprising a first aperture (25a) for receiving an end of the first delivery tube (21) and second aperture (28) for receiving an end of the second delivery tube (22, 23), the apertures being substantially coaxially aligned, **characterised by** supporting the first and second delivery tubes (21, 22, 23; 51, 61) in the apertures (25a, 28) with their ends spaced apart such that there is a predetermined clearance (42; 70) between the end of the peripheral wall of the first delivery tube (21; 51) and the end of the peripheral wall of the second delivery tube (22, 23; 61), and such that there is no fastener-supporting track or guide between the ends of the delivery tubes the fastener being propelled at such a speed and by such a pressure that it passes across the clearance (42; 70) from the first delivery tube (21; 51) into the second delivery tube (22, 23; 61).

12. A method according to claim 11, wherein the tubes (21, 22, 23; 51, 61) arc supported such that there is a clearance in the range 0.1mm to 20mm, 0.5 mm to 10mm, or in the range 0.5 mm to 2.0mm.

13. A method according to claim 11 or 12, further comprising providing a plurality of second delivery tubes (22, 23) and selectively moving the first delivery tube (21) into alignment one of the second delivery tubes (22, 23) so that the fastener is propelled into the desired tube.

14. A method according to claim 11 or 12, wherein the interface housing (20; 54, 64) comprises a first portion (54) in which the end of the first delivery tube (51) is received and a second portion (64) in which the end of the second delivery tube (61) is received, the method further comprising the step of bringing the first and second portions (54, 64) of the housing together so that they dock and the tubes (51, 61) are disposed with the aforementioned predetermined clearance (70).

15. A method for inserting a fastener into a workpiece comprising delivering the fastener to a fastener insertion tool using the fastener delivery method according to any one of claims 12 to 14.

## Patentansprüche

1. Vorrichtung für die Zuführung von Befestigungselementen, die aufweist: ein erstes und ein zweites flexibles längliches Rohr für die Zuführung von Befestigungselementen (21, 22, 23; 51, 61), in denen die Befestigungselemente unter Druck entlang einer Längsachse eines jeden Rohres transportiert werden, wobei das erste und das zweite Zuführrohr (21, 22, 23; 51, 61) jeweils eine Umfangswand (24) aufweisen, wobei die Wände (24) im Wesentlichen identische Innenprofile (25) mit einer Form definieren, die so konstruiert ist, dass sie sich an die Form der Befestigungselemente anpasst; ein Verbindungsgehäuse (20; 54, 64), das eine erste Öffnung (25a) für das Aufnehmen eines Endes des ersten Zuführrohres (21, 51) und eine zweite Öffnung (28, 29; 62) für das Aufnehmen eines Endes des zweiten Zuführrohres (22, 23; 61) aufweist, wobei die Öffnungen (25a, 28, 29) im Wesentlichen koaxial ausgerichtet sind, **dadurch gekennzeichnet, dass** das erste und das zweite Zuführrohr (21, 22, 23; 51, 61) in den Öffnungen (25a, 28, 29) getragen werden, wobei ihre Enden beabstandet sind, so dass ein vorgegebener Abstand (42; 70) zwischen dem Ende der Umfangswand des ersten Zuführrohres (21; 51) und dem Ende der Umfangswand des zweiten Zuführrohres (22, 23; 61) vorhanden ist, und so, dass keine Spur oder Führung für das Aufnehmen des Befestigungselementes zwischen den Enden der Zuführrohre (21, 22, 23; 51, 61) vorhanden ist.

2. Vorrichtung für die Zuführung von Befestigungselementen nach Anspruch 1, bei der der vorgegebene Abstand (42; 70) im Bereich von 0,1 mm bis 20 mm liegt.

3. Vorrichtung für die Zuführung von Befestigungselementen nach Anspruch 1, bei der der vorgegebene Abstand (42; 70) im Bereich von 0,5 mm bis 10 mm liegt.

4. Vorrichtung für die Zuführung von Befestigungselementen nach Anspruch 1, bei der der vorgegebene Abstand (42; 70) im Bereich von 0,5 mm bis 2,0 mm liegt.

5. Vorrichtung für die Zuführung von Befestigungselementen nach einem der Ansprüche 1 bis 4, bei der die Zuführrohre (21, 22, 23; 51, 61) mittels Befestigungsschrauben (31) befestigt werden, die in Bohrungen oder Vertiefungen (32) in der Außenfläche der Umfangswände in Eingriff kommen.

6. Vorrichtung für die Zuführung von Befestigungselementen nach einem der vorhergehenden Ansprüche, bei der das Gehäuse (20) eine Vielzahl von zweiten Öffnungen (28, 29) aufweist, die eine Vielzahl von zweiten Zuführrohren (22, 23) aufnehmen, wobei das erste Zuführrohr (21) im Gehäuse (20) beweglich ist, um so selektiv mit einem der zweiten Zuführrohre (28, 29) ausgerichtet zu werden.

7. Vorrichtung für die Zuführung von Befestigungselementen nach Anspruch 6, bei der die zweiten Öffnungen (28, 29) seitlich beabstandet sind und sich im Wesentlichen parallel erstrecken.

8. Vorrichtung für die Zuführung von Befestigungselementen nach Anspruch 6 oder 7, bei der das erste Zuführrohr (21) verschiebbar im Gehäuse für eine seitliche Bewegung zwischen einer ersten Position, wo es mit einem der zweiten Zuführrohre (28, 29) ausgerichtet ist, und einer zweiten Position verschiebbar aufgenommen wird, wo es mit einem anderen der zweiten Zuführrohre ausgerichtet ist.

9. Vorrichtung für die Zuführung von Befestigungselementen nach Anspruch 7 oder 8, bei der das erste Zuführrohr (21) in einem Gleitelement (34) aufgenommen wird, das sich relativ zu einem stationären Teil (36) des Gehäuses (20) verschiebt, wobei ein Ende des ersten Zuführrohres im Gleitelement und die Enden der zweiten Zuführrohre (22, 23) in einem stationären Halteelement (30) des Gehäuses (20) aufgenommen werden, wobei das Gleitelement (34) eine Öffnung (33) aufweist, die ausgebildet ist, um sich an das Außenprofil der Zuführrohre anzupassen, wobei das Halteelement (30) eine Vielzahl von Öffnungen aufweist, die sich jeweils an das Außenprofil der Zuführrohre (22, 23) anpassen, wobei mindestens ein Teil des Gleitelementes (34) in einer Spur aufgenommen wird, die im stationären Halteelement (30) definiert wird.

10. Vorrichtung für die Zuführung von Befestigungselementen nach einem der Ansprüche 1 bis 9, bei der das Verbindungsgehäuse (20; 54, 64) einen ersten und zweiten lösbar verbindbaren Verbindungsabschnitt (54, 64) aufweist.

11. Verfahren zur Zuführung von Befestigungselementen, das die Schritte des Antreibens von einem oder mehreren Befestigungselementen in einem ersten flexiblen länglichen Zuführrohr (21; 51) unter Druck entlang einer Längsachse des Rohres durch ein Verbindungsgehäuse (20; 54, 64) und heraus in ein zweites flexibles längliches Zuführrohr (22, 23; 61) aufweist, wobei die Zuführrohre Umfangswände aufweisen, die im Wesentlichen identische Innenprofile mit einer Form definieren, die so ausgebildet ist, dass sie komplementär zur Form der Befestigungselemente ist, wobei das Verbindungsgehäuse (20; 54, 64) eine erste Öffnung (25a) für das Aufnehmen eines Endes des ersten Zuführrohres (21) und eine zweite Öffnung (28) für das Aufnehmen eines Endes des zweiten Zuführrohres (22, 23) aufweist, wobei die Öffnungen im Wesentlichen koaxial ausgerichtet sind, **dadurch gekennzeichnet, dass** das erste und die zweiten Zuführrohre (21, 22, 23; 51, 61) in den Öffnungen (25a, 28) aufgenommen werden, wobei ihre Enden so beabstandet sind, dass ein vorgegebener Abstand (42; 70) zwischen dem Ende der Umfangswand des ersten Zuführrohres (21; 51) und dem Ende der Umfangswand des zweiten Zuführrohres (22, 23; 61) vorhanden ist und so, dass keine Spur oder Führung für das Aufnehmen des Befestigungselementes zwischen den Enden der Zuführrohre vorhanden ist, wobei das Befestigungselement mit einer derartigen Geschwindigkeit und mittels eines derartigen Druckes angetrieben wird, dass es sich über den Abstand (42; 70) vom ersten Zuführrohr (21; 51) in das zweite Zuführrohr (22, 23; 61) bewegt.

12. Verfahren nach Anspruch 11, bei dem die Rohre (21, 22, 23; 51, 61) so aufgenommen werden, dass ein Abstand im Bereich von 0,1 mm bis 20 mm, 0,5 mm bis 10 mm oder im Bereich von 0,5 mm bis 2,0 mm vorhanden ist.

13. Verfahren nach Anspruch 11 oder 12, das außerdem die Schritte des Bereitstellens einer Vielzahl von zweiten Zuführrohren (22, 23) und des selektiven Bewegens des ersten Zuführrohres (21) in Ausrichtung mit einem der zweiten Zuführrohre (22, 23) aufweist, so dass das Befestigungselement in das gewünschte Rohr getrieben wird.

14. Verfahren nach Anspruch 11 oder 12, bei dem das Verbindungsgehäuse (20; 54, 64) einen ersten Abschnitt (54), in dem das Ende des ersten Zuführrohres (51) aufgenommen wird, und einen zweiten Abschnitt (64) aufweist, in dem das Ende des zweiten Zuführrohres (61) aufgenommen wird, wobei das Verfahren außerdem den Schritt des Zusammenbringens des ersten und des zweiten Abschnittes (54, 64) des Gehäuses aufweist, so dass sie andocken und die Rohre (51, 61) mit dem vorangehend erwähnten vorgegebenen Abstand (70) angeordnet werden.

15. Verfahren zum Einsetzen eines Befestigungselementes in ein Werkstück, das den Schritt des Zuführens des Befestigungselementes zu einem Befestigungselementeinsetzwerkzeug bei Anwendung des Verfahrens zur Zuführung von Befestigungselementen nach einem der Ansprüche 12 bis 14 aufweist.

## Revendications

1. Appareil de distribution d'éléments de fixation, comprenant des premier et deuxième tubes allongés flexibles de distribution d'éléments de fixation (21, 22, 23 ; 51, 61), dans lesquels les éléments de fixation sont transférés sous pression le long d'un axe longitudinal de chaque tube, les premier et deuxième tubes de distribution (21, 22, 23 ; 51, 61) comportant chacun une paroi périphérique (24), les parois (24) définissant des profils internes (25) essentiellement identiques, ayant une forme destinée à se conformer à la forme des éléments de fixation, un boîtier d'interface (20 ; 54, 64), comprenant une première ouverture (25a) pour recevoir une extrémité du premier tube de distribution (21, 51), et une deuxième ouverture (28, 29 ; 62) pour recevoir une extrémité du deuxième tube de distribution (22, 23 ; 61), les ouvertures (25a, 28, 29) étant alignées de manière essentiellement coaxiale, **caractérisé en ce que** les premier et deuxième tubes de distribution (21, 22, 23 ; 51, 61) sont supportés dans les ouvertures (25a, 28, 29), leurs extrémités étant espacées de sorte à établir un dégagement prédéterminé (42 ; 70) entre l'extrémité de la paroi périphérique du premier tube de distribution (21 ; 51) et l'extrémité de la paroi périphérique du deuxième tube de distribution (22, 23 ; 61) et de sorte qu'il n'existe pas de piste ou de guide de support d'éléments de fixation entre les extrémités des tubes de distribution (21, 22 , 23 ; 51, 61).

2. Appareil de distribution d'éléments de fixation selon la revendication 1, dans lequel le dégagement prédéterminé (42 ; 70) est compris dans l'intervalle allant de 0,1 mm à 20 mm.

3. Appareil de distribution d'éléments de fixation selon la revendication 1, dans lequel le dégagement prédéterminé (42 ; 70) est compris dans l'intervalle allant de 0,5 mm à 10 mm.

4. Appareil de distribution d'éléments de fixation selon la revendication 1, dans lequel le dégagement prédéterminé (42 ; 70) est compris dans l'intervalle allant de 0,5 mm à 2,0 mm.

5. Appareil de distribution d'éléments de fixation selon l'une quelconque des revendications 1 à 6, dans lequel les tubes de distribution (21, 22, 23 ; 51, 61) sont fixés par des vis de fixation (31), s'engageant dans des alésages ou des évidements (32) dans la surface externe des parois périphériques.

6. Appareil de distribution d'éléments de fixation selon l'une quelconque des revendications précédentes, dans lequel le boîtier (20) comporte plusieurs deuxièmes ouvertures (28 29), supportant plusieurs deuxièmes tubes de distribution (22, 23), le premier tube de distribution (21) pouvant être déplacé dans le boîtier (20), de sorte à être sélectivement aligné avec l'un des deuxièmes tubes de distribution (28, 29).

7. Appareil de distribution d'éléments de fixation selon la revendication 6, dans lequel les deuxièmes ouvertures (28, 29) sont espacées latéralement et s'étendent de manière essentiellement parallèle.

8. Appareil de distribution d'éléments de fixation selon les revendications 6 ou 7, dans lequel le premier tube de distribution (21) est supporté de manière coulissante dans le boîtier, en vue d'un déplacement latéral entre une première position, dans laquelle il est aligné avec l'un des deuxièmes tubes de distribution (28, 29), et une deuxième position, dans laquelle il est aligné avec un autre des deuxièmes tubes de distribution.

9. Appareil de distribution d'éléments de fixation selon les revendications 7 ou 8, dans lequel le premier tube de distribution (21) est supporté dans un élément coulissant (34), glissant par rapport à une partie fixe (36) du boîtier (20), une extrémité du premier tube de distribution étant reçue dans l'élément coulissant et les extrémités des deuxièmes tubes de distribution (22 ; 23) étant reçues dans un élément de retenue fixe (30) du boîtier (20), l'élément coulissant (34) comportant un orifice (33), configuré de sorte à se conformer au profil externe des tubes de distribution, l'élément de retenue (30) comportant plusieurs orifices, se conformant chacun au profil externe des tubes de distribution (23, 23), au moins une partie de l'élément coulissant (34) étant reçue dans une piste définie dans l'élément de retenue fixe (30).

10. Appareil de distribution d'éléments de fixation selon l'une quelconque des revendications 1 à 9, dans lequel le boîtier d'interface (20 ; 54, 64) comprend des première et deuxième parties d'interface à connexion amovible (54, 64).

11. Procédé de distribution d'éléments de fixation, comprenant les étapes de propulsion sous pression d'un ou de plusieurs éléments de fixation dans un premier tube de distribution allongé flexible (21 ; 51), le long d'un axe longitudinal du tube, à travers un boîtier d'interface (20 ; 54, 64) et vers l'extérieur dans un deuxième tube de distribution allongé flexible (22, 23 ; 61), les tubes de distribution comportant des parois périphériques définissant des profils internes essentiellement identiques, ayant une forme configurée de sorte à être complémentaire de la forme des éléments de fixation, le boîtier d'interface (20 ; 54, 64) comprenant une première ouverture (25a) pour recevoir une extrémité du premier tube de distribution (21), et une deuxième ouverture (28) pour recevoir une extrémité du deuxième tube de distribution (22, 23), les ouvertures étant alignées de manière essentiellement coaxiale, **caractérisé par** le support des premier et deuxième tubes de distribution (21, 22, 23 ; 51, 61) dans les ouvertures (25a, 28), leurs extrémités étant espacées, de sorte à établir un dégagement prédéterminé (42 ; 70) entre l'extrémité de la paroi périphérique du premier tube de distribution (21 ; 51) et l'extrémité de la paroi périphérique du deuxième tube de distribution (22, 23 ; 61), et de sorte qu'il n'existe pas de piste ou de guide de support d'éléments de fixation entre les extrémités des tubes de distribution, l'élément de fixation étant propulsé à une vitesse telle et en présence d'une pression telle qu'il passe à travers le dégagement (42 ; 70), du premier tube de distribution (21 ; 51) dans le deuxième tube de distribution (22, 23 ; 61).

12. Procédé selon la revendication 11, dans lequel les tubes (21, 22, 23 ; 51, 61) sont supportés de sorte à établir un dégagement compris dans l'intervalle allant de 0,1 mm à 20 mm, de 0,5 mm à 10 mm, ou dans l'intervalle allant de 0,5 mm à 2,0 mm.

13. Procédé selon les revendications 11 ou 12, comprenant en outre les étapes de fourniture de plusieurs deuxièmes tubes de distribution (22, 23) et de déplacement sélectif du premier tube de distribution (21) pour l'aligner avec l'un des deuxièmes tubes de distribution (22, 23), de sorte que l'élément de fixation est propulsé dans le tube voulu.

14. Procédé selon les revendications 11 ou 12, dans lequel le boîtier d'interface (20 ; 54, 64) comprend une première partie (54), dans laquelle est reçue l'extrémité du premier tube de distribution (51), et une deuxième partie (64), dans laquelle est reçue l'extrémité du deuxième tube de distribution (61), le procédé comprenant en outre l'étape de rapprochement des première et deuxième parties (54, 64) du boîtier de sorte à les mettre en contact, les tubes (51, 61) étant agencés dans le cadre dudit dégagement prédéterminé (70).

15. Procédé d'insertion d'un élément de fixation dans une pièce à usiner, comprenant l'étape de distribution de l'élément de fixation vers un outil d'insertion de l'élément de fixation en appliquant le procédé de distribution d'éléments de fixation selon l'une quelconque des revendications 12 à 14.
